Europäisches Patentamt

European Patent Office

Office européen des brevets

(19)

(11) **EP 0 786 670 B1**

(12) **FASCICULE DE BREVET EUROPEEN**

(45) Date de publication et mention
de la délivrance du brevet:
**10.07.2002 Bulletin 2002/28**

(51) Int Cl.7: **G01V 1/38**, G01V 1/36,
G01V 13/00, G01H 3/00

(21) Numéro de dépôt: **97400138.0**

(22) Date de dépôt: **22.01.1997**

(54) **Procédé de traitement de calibration d'une paire de capteurs hydrophone/géophone et procédé de prospection sismique mettant en oeuvre ce traitement**

Verfahren für einen Hydrophon/Geophon Sensorpaar Kalibrierungsverarbeitung und seismisches Prospektionsverfahren zur Durchführung dieser Verarbeitung

Procedure for calibration processing of a hydrophone/geophone sensor pair and procedure for seismic prospection implementing this processing

(84) Etats contractants désignés:
**FR GB NL**

(30) Priorité: **23.01.1996 FR 9600719**

(43) Date de publication de la demande:
**30.07.1997 Bulletin 1997/31**

(73) Titulaire: **COMPAGNIE GENERALE DE GEOPHYSIQUE**
**F-91300 Massy (FR)**

(72) Inventeur: **Soubaras, Robert**
**91400 Orsay (FR)**

(74) Mandataire: **Martin, Jean-Jacques et al**
**Cabinet Régimbeau**
**20, rue de Chazelles**
**75847 Paris cedex 17 (FR)**

(56) Documents cités:
**EP-A- 0 534 648**     **WO-A-96/31788**
**US-A- 4 486 865**     **US-A- 4 979 150**
**US-A- 5 365 492**     **US-A- 5 396 472**
**US-A- 5 524 100**

**Description**

La présente invention est relative à un procédé de traitement de la calibration d'au moins une paire de capteurs hydrophone/géophone utilisée dans un traitement de prospection sismique marine.

Elle concerne également un procédé de prospection sismique marine mettant en oeuvre un tel traitement.

On utilise généralement en sismique mariné des câbles portant des capteurs hydrophones qui sont tractés par des navires qui portent également des sources acoustiques.

Ces câbles (généralement appelés "streamer" par l'Homme du Métier selon la terminologie anglo-saxonne) ne peuvent être utilisés dans certaines zones, et notamment dans les zones de production encombrées de plates-formes.

On utilise alors pour la réception des ondes acoustiques émises par les navires des hydrophones disposés sur le fond de la mer.

Dans ces différentes techniques, les enregistrements réalisés par les hydrophones doivent être traités de façon à supprimer dans le signal obtenu les réflexions fantômes (réflexions des ondes primaires qui portent l'information sur la géologie du sous-sol à la surface de l'eau, appelées "ghost" selon la terminologie anglo-saxonne généralement utilisée), ainsi qu'éventuellement les réverbérations dites "peg-legs" correspondant à des réflexions multiples à la surface et au fond de l'eau, qui rendent les enregistrements difficiles à interpréter.

Spectralement, les ondes fantômes se traduisent par le filtrage des données utiles par un filtre qui annule le signal à des fréquences ("notches" selon la terminologie anglo-saxonne) multiples de $f_n$ = v/(2$\Delta$z), $\Delta$z étant la profondeur des récepteurs et v la vitesse du son dans l'eau (1500 m/s).

Lorsque $\Delta$z est inférieur à 10 m, ce qui est le cas d'une acquisition classique avec des hydrophones portés par un câble tracté par un navire, $f_n$ est supérieur à 75 Hz et ces zones sont en dehors de la bande passante utile. L'onde fantôme ne se traduit alors, dans la bande passante utile, que par des atténuations, qu'il est possible de supprimer par déconvolution.

Par contre, dans le cas de capteurs hydrophones disposés sur le fond de l'eau, $\Delta$z est la profondeur d'eau qui vaut typiquement 50 m, et $f_n$ = 15 Hz. La bande passante est parsemée de fréquences pour lesquelles le signal de réponse est annulé par l'onde fantôme. Supprimer l'onde fantôme par déconvolution, conduit à un bruitage important des résultats.

Récemment, plusieurs techniques ont été proposées dans lesquelles l'acquisition est réalisée au moyen de capteurs hydrophones et géophones disposés sur le fond de la mer, dont les sorties sont combinées.

On connaît en particulier par US 4 486 865 un procédé d'acquisition sismique utilisant des hydrophones et géophones répartis par paire au fond de l'eau, dans lequel on déconvolue la composante hydrophone et la composante géophone d'une même paire de capteurs par leurs fonctions spectrales préalablement déterminées et on moyenne les données déconvoluées pour obtenir une sortie qui correspond à l'onde montante juste au dessus du fond de la surface de l'eau, dans laquelle les ondes fantômes ont été supprimées.

Toutefois, avant de pouvoir être utilisées conjointement, les enregistrements hydrophone et géophone doivent être calibrés. Un hydrophone parfait mesure la pression et un géophone parfait la vitesse. Un hydrophone réel mesure la pression filtrée par une réponse instrumentale, et un géophone mesure la vitesse filtrée par une réponse instrumentale. La calibration est par définition l'égalisation des réponses instrumentales.

Il a été proposé par US 4 979 150 un procédé de prospection sismique, qui met en oeuvre un traitement qui combine les enregistrements hydrophones et géophones et vise à supprimer les ondes fantômes et les réverbérations de type "peg-legs" sans avoir à mettre en oeuvre de déconvolution sur les enregistrements hydrophones et géophones. Selon ce traitement, un scalaire de calibration est appliqué à la composante hydrophone ou à la composante géophone et les composantes calibrées ainsi obtenues sont sommées. Ce scalaire de calibration est fonction en particulier du coefficient de réflexion du fond de l'eau.

Il est calculé de manière déterministe, à partir de tirs de calibration ou de manière statistique à partir de l'hypothèse que la réflectivité du sous-sol présente une auto-corrélation blanche.

Une méthode similaire a également été proposée dans US 5 365 492. Selon cette méthode, un scalaire de calibration est appliqué à un enregistrement géophone préalablement débruité. L'enregistrement géophone débruité et calibré est ajouté à celui de l'hydrophone, ce qui donne la sortie désirée exempte de réverbération dans la couche d'eau.

Le scalaire de calibration y est calculé par maximisation itérative d'une fonction varimax de l'autocorrélation du signal de sortie.

Toutefois, les calibrations par un scalaire telles que proposées dans US 4 979 150 et US 5 365 492 partent de l'hypothèse statistique que la réflectivité de la géologie présente une autocorrélation blanche.

Or, cette hypothèse bien que couramment faite en traitement sismique, n'est pas toujours vérifiée.

En outre, une calibration scalaire est forcément imprécise, puisqu'elle ne tient pas compte des variations spectrales du couplage.

Par ailleurs, la détermination du scalaire de calibration par un traitement itératif rend ledit scalaire particulièrement sensible au bruit, de sorte qu'une étape de débruitage est nécessaire.

L'invention a pour buts de pallier ces différents inconvénients et propose un traitement de calibration qui égalise les réponses instrumentales de l'hydrophone et du géophone, à l'aide d'une fonction de calibration spectrale, cette fonction de calibration spectrale étant calculée à l'aide d'un critère robuste au bruit et convenant au cas où l'hydrophone et le géophone sont tous deux bruités, ce critère ne faisant aucune hypothèse statistique sur la réflectivité du sous-sol et ne nécessitant aucun tir de calibration.

Plus particulièrement, l'invention propose un procédé de traitement pour la calibration d'au moins une paire de capteurs hydrophone/géophone disposés sur le fond de l'eau et utilisés dans un traitement de prospection sismique dans lequel une source acoustique émet dans l'eau un signal et les capteurs au fond de l'eau relèvent des enregistrements hydrophone H et géophone G, caractérisé en ce qu'on applique à ces enregistrements une calibration qui minimise, dans une fenêtre temporelle se situant au delà d'un temps théorique d'extinction, l'énergie d'un signal S qui est déterminé en fonction des enregistrements hydrophone et géophone et qui correspond au signal source propagé à travers la couche d'eau jusqu'au capteur.

Ainsi, le traitement proposé par l'invention prend comme hypothèse de calibration le fait que l'émission de la source sismique est de durée limitée. Cette hypothèse est beaucoup plus fiable que celle de réflectivité blanche sous-entendue dans les méthodes de calibration statistique de l'art antérieur.

La calibration déterminée avec le procédé proposé par l'invention peut varier lentement avec la fréquence afin de corriger les imperfections du couplage du géophone avec le fond de l'eau.

Dans un mode de mise en oeuvre préféré, on filtre les enregistrements hydrophone H par un opérateur leur ajoutant une réflexion fantôme de type géophone puis on filtre les enregistrements géophone G par un opérateur leur ajoutant une réflexion fantôme de type hydrophone et on cherche une calibration qui égalise au mieux les enregistrements hydrophone et les enregistrements géophone ainsi filtrés sur une fenêtre temporelle au delà du temps théorique d'extinction.

Avantageusement également, on calibre les enregistrements géophone sur les enregistrements hydrophone.

Notamment :

- on détermine des données hydrophones $H_R$ et géophones $G_R$ correspondant aux enregistrements H et G propagés à travers un aller-retour dans la couche d'eau,
- on calcule des données somme hydrophone $H_\Sigma$ et différence géophone $G_\Delta$ telles que :

$$H_\Sigma = \frac{H + rH_R}{2}$$

et

$$G_\Delta = \frac{G - rG_R}{2}$$

r étant une fonction de transfert modélisant la surface de l'eau,
- on détermine des fonctions de calibration $C_H$, $C_G$ minimisant, au delà d'un temps théorique d'extinction, l'énergie de:

$$S = C_H * H_\Sigma - C_G * G_\Delta$$

S correspondant au signal source propagé à travers la couche d'eau,
- on calibre les données géophones et/ou hydrophones par convolution avec les fonctions de calibration $C_G$ et $C_H$.

Comme on le comprendra à la lecture de la description qui suit, ces fonctions de calibration $C_G$ et $C_H$ ne dépendent pas de la réflectivité du fond de l'eau.

L'invention concerne également un procédé de prospection sismique marine dans lequel on met en oeuvre le procédé de traitement de calibration selon l'une des revendications précédentes et on traite les données ainsi obtenues pour en déduire une information sur la géologie du sous-sol.

D'autres caractéristiques et avantages de l'invention ressortiront encore de la description qui suit. Cette description est purement illustrative et non limitative. Elle doit être lue en regard des dessins annexés sur lesquels :

- la figure 1 illustre schématiquement les différentes grandeurs intervenant dans la modélisation utilisée pour le procédé proposé par l'invention

- la figure 2 est un schéma synoptique illustrant le procédé proposé par l'invention ;

- les figures 3a à 3h illustrent, pour un signal source synthétique, les différents signaux obtenus dans les différentes étapes du procédé proposé par l'invention.

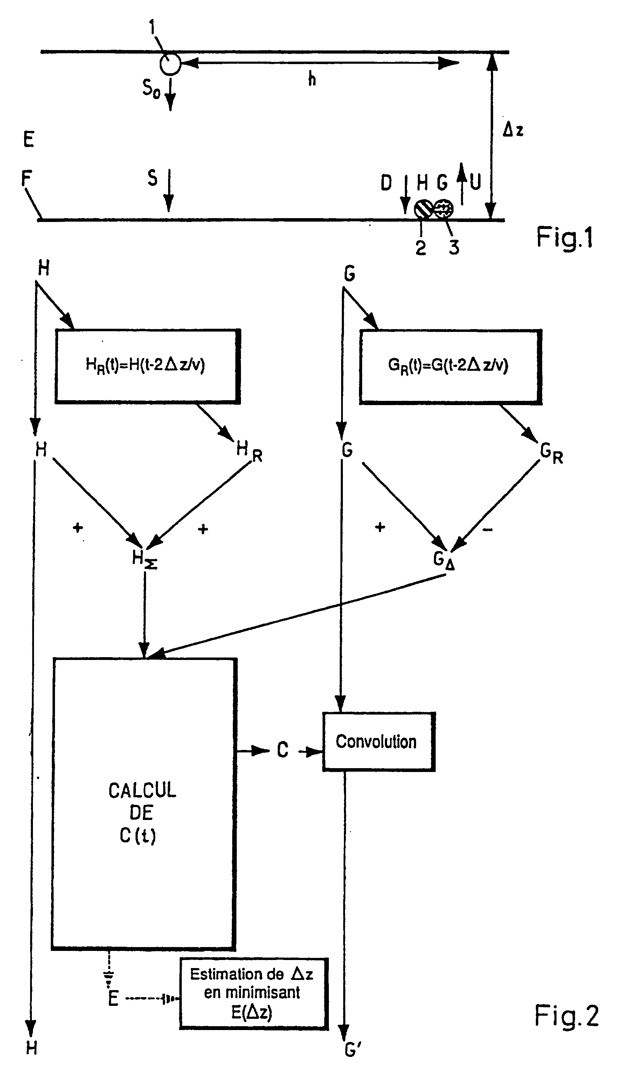

On a illustré sur la figure 1 une source acoustique 1 émettant un signal $S_0$ à la surface d'une couche d'eau E, ainsi que des capteurs hydrophones 2 et géophones 3 disposés sur un fond marin F. La couche d'eau E présente une épaisseur $\Delta z$. Le décalage horizontal entre la source 1 et le couple de capteurs hydrophone/géophone 2, 3 a été référencé par h.

Les capteurs hydrophones 2 mesurent la pression et sont isotropes. Ils enregistrent la somme des ondes acoustiques montantes U et descendantes D.

Les capteurs géophones 3 sont posés verticalement sur le fond F et mesurent la vitesse verticale des ondes acoustiques. Ils enregistrent les ondes acoustiques montantes U en leur soustrayant les ondes descendantes D.

Les signaux H et G enregistrés par les hydrophones 2 et les géophones 3 s'écrivent, en fonction des ondes montantes U et des ondes descendantes D :

$$H = U + D \tag{1}$$

$$G = (U - D)/I_0 \tag{2}$$

Dans l'équation (2), $I_0$ est l'impédance acoustique de l'eau ($I_0 = \rho v$ où $\rho$ est la densité de l'eau et v la vitesse de son dans l'eau).

Dans la suite du présent texte, pour simplifier la présentation, on a pris $I_0 = 1$, le géophone étant de toute façon destiné à être calibré.

La surface de l'eau se comporte comme un réflecteur de coefficient de réflexion -1 et ajoute au signal correspondant à la source $S_0$ une onde descendante égale à l'onde montante U, mais de signe opposé.

Au niveau du fond de l'eau, l'onde descendante s'écrit par conséquent :

$$D = -ZU + Z^{1/2} S_0 \tag{3}$$

où Z est un opérateur correspondant à une propagation aller-retour dans la couche d'eau, c'est à dire à un retard d'un temps $\Delta t = 2\Delta z/v$, v étant la vitesse du son dans la couche d'eau, et où $Z^{1/2}$ est un opérateur correspondant à une propagation aller du son entre la surface et le fond de l'eau.

Dans le cas de l'approximation 1-D, Z est simplement un retard d'un temps $\Delta t = 2\Delta z/v$ et $Z^{1/2}$ un retard de temps $\Delta z/v$.

En notation fréquentielle $Z = e^{-2j\pi f \Delta t}$ où f est la fréquence.

Si on prend en compte les effets de propagation 2-D ou 3-D, on aurait dans le domaine $(\omega,k)$ avec $\omega = 2\pi f$ et k nombre d'onde :

$$Z = e^{-2j\Delta z \frac{\omega}{v} \sqrt{1 - v^2 k^2/\omega^2}} \tag{4}$$

En définissant la source propagée S par :

$$S = Z^{1/2} S_0 \tag{5}$$

l'expression de D devient :

$$D = S - ZU \tag{6}$$

et reportant (6) dans (1) et (2) on obtient les équations de modélisation suivantes :

$$H = S + (1 - Z) U \tag{7}$$

$$G = -S + (1 + Z) U \tag{8}$$

Par conséquent S s'écrit :

$$S = \frac{1 + Z}{2} H - \frac{1 - Z}{2} G \tag{9}$$

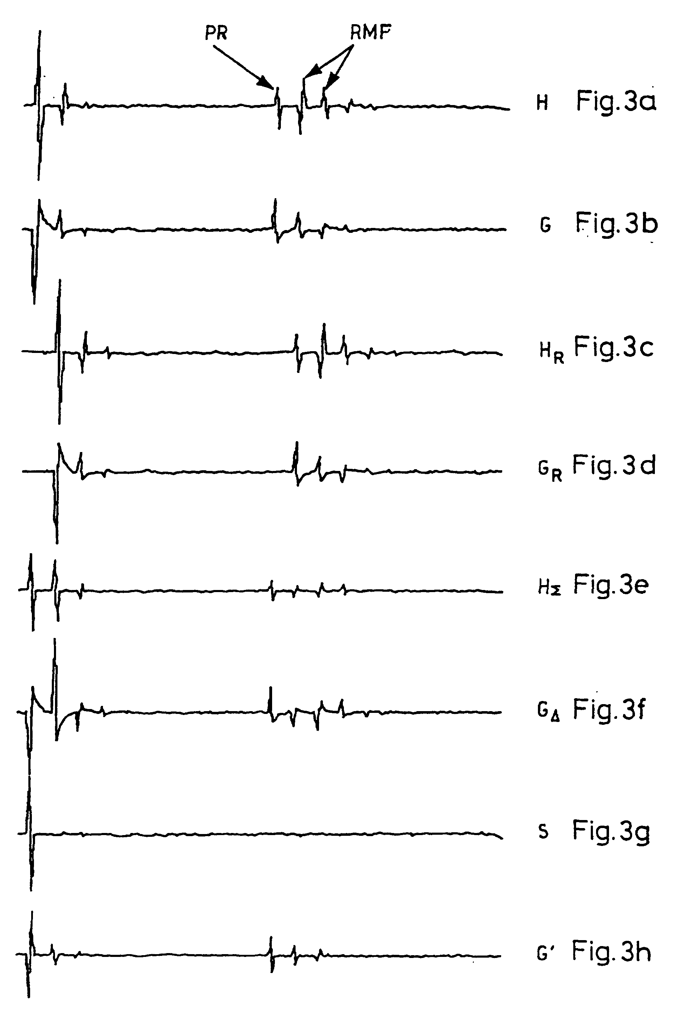

On va maintenant décrire, en référence à la figure 2 et aux figures 3a à 3h, un exemple de traitement de calibration conforme à l'invention.

On notera que dans un mode de mise en oeuvre préférentiel, on ne calibre pas les hydrophones et les géophones dans l'absolu, mais on calibre chaque géophone par rapport à l'hydrophone auquel il est associé. On laisse donc l'hydrophone inchangé et on cherche une calibration géophone avec variation spectrale de façon à prendre en compte les effets de couplage géophone-fond de l'eau. L'hydrophone est laissé inchangé car c'est une bonne référence : son couplage avec son milieu est toujours excellent et il est insensible à son orientation.

La calibration s'effectue de la façon suivante.

On a représenté respectivement sur les figures 3a et 3b les enregistrements hydrophone H et géophone G. Pour mieux faire comprendre l'invention, on a indiqué sur l'enregistrement H la réflexion primaire PR contenant le signal utile, ainsi que les réflexions fantômes et multiples de type peg-leg RMF.

On calcule les données hydrophones et géophones $H_R$ et $G_R$ (figures 3c, 3d) propagées à travers un aller-retour dans la couche d'eau:

$$H_R = ZH \tag{10}$$

$$G_R = ZG \tag{11}$$

Dans le cas de l'approximation à une dimension, les équations (10) et (11) s'écrivent :

$$H_R (t) = H (t - \frac{2\Delta z}{v}) \tag{12}$$

$$G_R (t) = G (t - \frac{2\Delta z}{v}) \tag{13}$$

On calcule ensuite des grandeurs somme hydrophone $H_\Sigma$ (figure 3e) et différence géophone $G_\Delta$ (figure 3f) :

$$H_\Sigma = \frac{H + H_R}{2} \tag{14}$$

$$G_\Delta = \frac{G - G_R}{2} \tag{15}$$

ce qui permet d'écrire l'équation (9) donnant la source propagée S sous la forme :

$$S = H_\Sigma - G_\Delta \tag{16}$$

La vraie source sismique propagée $S_{exacte}$ est nulle au delà d'un certain temps. En effet, pour chaque position de la source et position récepteur, on peut calculer le temps d'arrivée $T_s$ de la source sismique :

$$T_S = (\Delta z^2 + h^2)^{1/2}/v,$$

et son temps d'extinction $T_E = T_S + \Delta T_S$, $\Delta T_S$ étant la durée de la source. $S_{exacte}$ doit être nulle au delà du temps d'extinction $T_E$.

Par ailleurs, l'opérateur de propagation Z, qui correspond à la propagation aller-retour dans la couche d'eau, est uniquement un opérateur approché. Dans l'équation $Z = e^{-2j\pi f 2\Delta z/v}$, on fait en effet une approximation 1-D qui consiste à considérer que les ondes se propagent suivant une direction proche de la verticale.

Cette approximation n'est valable que dans une certaine zone de données. Cette zone de validité peut être définie pour chaque trace par un temps de validité $T_{1D}$ au delà duquel cette approximation 1-D est acceptable. Le temps de validité $T_{1D}$ doit être d'autant plus grand que le décalage h de la trace est grand.

Si donc on se trouve au delà du temps d'extinction $T_E$ et dans la zone de validité de l'opérateur Z de la source, la source S calculée par (9) doit être nulle. Bien entendu, ceci n'est vrai que si les données hydrophone et géophone sont bien calibrées.

On se sert de cette hypothèse pour calibrer le géophone sur l'hydrophone.

Plus particulièrement, la calibration du géophone sur l'hydrophone se fait en calculant une fonction de transfert qui, appliquée au géophone, minimise l'énergie de la source estimée dans une fenêtre temporelle située au delà à la fois du temps d'extinction de la source et du temps de validité de l'opérateur de propagation.

Cette fonction C(t) est telle que :

$$S(t) = H_\Sigma(t) - C(t)* G_\Delta(t) \tag{17}$$

ait une norme minimale dans une fenêtre temporelle $t \in [T, T_{max}]$, où T est un temps supérieur ou égal à $T_E$ et à $T_{1D}$ et où $T_{max}$ est un temps inférieur en temps d'enregistrement pour un tir.

Par exemple avec la norme $L_2$, on a le système de moindre carrés GC = H :

$$\begin{bmatrix} G_\Delta(n_1-p_1) & G_\Delta(n_1-p_1-1) & \cdots & G_\Delta(n_1-p_2) \\ G_\Delta(n_1-p_1+1) & G_\Delta(n_1-p_1) & \cdots & G_\Delta(n_1-p_2+1) \\ \cdots & \cdots & \cdots & \cdots \\ G_\Delta(n_2-p_1) & G_\Delta(n_2-p_1-1) & \cdots & G_\Delta(n_2-p_2) \end{bmatrix} \begin{bmatrix} C(p_1) \\ C(p_1+1) \\ \cdots \\ C(p_2) \end{bmatrix} = \begin{bmatrix} H_\Sigma(n_1) \\ H_\Sigma(n_1+1) \\ \cdots \\ \cdots \\ H_\Sigma(n_2) \end{bmatrix} \tag{18}$$

$[p_1, p_2]$ étant les indices correspondants à l'intervalle $[-t_1, t_2]$, et $[n_1, n_2]$ les indices correspondants à $[T, T_{max}]$ qui se résout par

$$C = (GT\ G)^{-1}\ G^T\ H. \tag{19}$$

L'énergie minimisée est $\mathbf{E = H^T (H-GC)}$.

Elle dépend de plusieurs paramètres, notamment la profondeur d'eau $\Delta z$ à l'endroit des capteurs hydrophone et géophone considérés, et on peut estimer cette profondeur en calculant l'énergie résiduelle $E(\Delta z)$ pour plusieurs valeurs $\Delta z$ et en choisissant celle qui minimise cette énergie résiduelle.

Elle dépend également du coefficient de réflexion r de la surface de l'eau, qui a été implicitement pris égal à -1 jusqu'à présent. Cette réflexion se prend en compte en remplaçant Z par rZ dans les équations (10) et (11). Ce coefficient se calcule en choisissant celui qui minimise l'énergie résiduelle E.

Bien entendu, on pourrait également, par un traitement similaire, calibrer les enregistrements hydrophones sur les enregistrements géophones ou calibrer à la fois les enregistrements géophones et les enregistrements hydrophones en minimisant, au-delà d'un temps théorique d'extinction, l'énergie de

$$S = C_H * H_\Sigma - C_G * G_\Delta,$$

où $C_H$ et $C_G$ sont des fonctions de calibration, cette minimisation étant soumise à certaines contraintes de façon à éliminer la solution triviale $C_H = C_G = 0$.

La calibration des enregistrements géophones sur les enregistrements hydrophones est toutefois préférée ($C_H = 1$).

Une fois C(t) calculé, on calcule les données géophone calibrées en convoluant les données géophone par C(t).

On peut également calculer une fonction de transfert de la surface de l'eau, que l'on a considéré comme un miroir parfait de coefficient de réflexion -1 jusqu'à présent. Pour cela, on considère que la surface de l'eau agit comme une fonction de transfert -r(t), r(t) étant de support temporel donné. On remplace pour cela l'équation (6) par :

$$D = S - rZU \qquad (6')$$

En notant G'(t) = C(t)*G(t) les données géophone calibrées, on en déduit les nouvelles expressions de H, G et S remplaçant les équations (7) à (9) :

$$H = S + (1 - rZ)\, U \qquad (7')$$

$$G = -S + (1 + rZ)\, U \qquad (8')$$

$$S = \frac{1 + rZ}{2}\, H - \frac{1 - rZ}{2}\, G \qquad (9')$$

On met S sous la forme, en notant $G'_R = ZG'$ :

$$S = \frac{H - G'}{2} + r\, \frac{H_R + G'_R}{2} \qquad (20)$$

On calcule donc (H-G') et ($H_R+G'_R$) puis r(t) est calculé de façon à minimiser l'expression (20) de S dans une fenêtre temporelle donnée.

La calibration C(t) peut être recalculée avec la surface de l'eau modélisée par une fonction de transfert -r(t). D'après (9'), il faut remplacer (14 et (15) par :

$$H_\Sigma = \frac{H + rH_R}{2} \qquad (14')$$

$$G_\Delta = \frac{G - rG_R}{2} \qquad (15')$$

Lorsque C(t) est calculé, on peut aussi calculer la source propagée S(t) par l'équation (17).

Cette source S ainsi obtenue a été représentée sur la figure 3g. Comme on peut le voir sur cette figure, ce signal est d'une énergie minimale, les réflexions primaires ainsi que les réflexions fantômes et peg-leg y étant supprimées après réception du signal source.

Par ailleurs, on peut également calculer la troncature de la source S(t) pour les valeurs $t \in [T, T_{max}]$. Cette partie tronquée est utilisée dans un contrôle qualité, dans lequel il est vérifié qu'elle présente le moins d'énergie possible, et surtout le moins d'énergie cohérente possible.

Bien entendu, il est souhaitable que la fonction de transfert de calibration soit unique et ne dépende que des caractéristiques de l'hydrophone et du géophone. A cet effet, on se place dans le cas de collections de données à récepteur commun - c'est-à-dire que l'on rassemble les traces sismiques correspondant aux différentes positions de la source sismique pour chaque couple capteurs 2,3 - et on calcule une seule fonction de calibration pour toute la collection.

A cet effet, pour chaque trace sismique d'indice i, i étant l'indice de la position de la source sismique, on calcule, à partir du décalage de la trace h(i) et de la profondeur de l'eau à la position du récepteur $\Delta z$, le temps d'extinction de la source $T_E(i)$ et le temps de validité $T_{1D}(i)$ de l'approximation 1-D consistant à remplacer l'opérateur de propagation Z par un retard d'un temps $\Delta f = 2\Delta z/v$.

On minimise ensuite l'énergie de la source estimée pour tous les indices i et pour les temps supérieurs à $T_E$(i) et à $T_{1D}(i)$. Ceci revient à calculer les différentes matrices $G_i$ et les différents second membres $H_i$ de l'équation (18) pour des temps $T_i \geq$ MAX $[T_E(i), T_{1D}(i)]$ et à inverser le système :

$$(\sum_i G_i)C = \sum_i H_i \qquad\qquad (21)$$

obtenu en sommant les matrices et en sommant les second membres pour avoir une seule fonction de calibration C pour chaque collection récepteur.

Une fois la fonction de calibration C(t) calculée, on calcule les données géophone calibrées en convoluant toutes les traces géophone de la collection récepteur commun par C(t).

Dans le procédé de prospection sismique proposé par l'invention, ces données sont ensuite traitées pour en déduire une information sur la géologie du sous-sol.

Un exemple de traitement va maintenant être donné.

D'autres traitements pourraient bien entendu être envisagés.

Après calcul des données géophones calibrées

$$G' = C^*G$$

(représenté sur la figure 3h),

$$G'_R = C^*G_R$$

et

$$G'_\Delta = C^*G_\Delta,$$

on calcule les voies différence hydrophone et somme géophone par :

$$H_\Delta = \frac{H - H_R}{2} \qquad\qquad (22)$$

$$G'_\Sigma = \frac{G' + G'_R}{2} \qquad\qquad (23)$$

On calcule ensuite la source et la source tronquée par :

$$S = H_\Sigma - G'_\Delta \qquad\qquad (24)$$

La source propagée S est ensuite tronquée en une source $S_T$

$$S_T = S \text{ tronquée} \qquad\qquad (25)$$

Puis on calcule le filtrage adapté :

$$M = H_\Delta - G'_\Sigma \qquad (26)$$

et l'onde montante retardée :

$$U_R = \frac{S_T - M}{2} \qquad (27)$$

Finalement, on calcule la sortie :

$$U = Z^{-1} U_R \qquad (28)$$

En approximation unidimensionnelle, $Z^{-1}$ est un opérateur correspondant à une avance d'un temps $2\Delta z/v$, c'est-à-dire que (28) peut s'écrire :

$$U(t) = U_R \ (t+ 2\Delta z/v) \qquad (29)$$

La sortie U n'a plus le fantôme récepteur et présente un bruit atténué car elle est calculée à partir de $S_T$, qui est faiblement bruitée puisque tronquée, et de M qui est également faiblement bruitée puisque correspondant à un filtre adapté.
D peut par ailleurs se déduire en remplaçant dans l'équation (5), U par son expression (28) :

$$D = \frac{S_T + M}{2} \qquad (30)$$

De façon connue en soi de l'Homme du Métier, les oscillations secondaires de type "peg-legs", qui se manifestent de la même manière sur les données hydrophone et géophone, peuvent être supprimées par un traitement ultérieur.

## Revendications

**1.** Procédé de traitement sismique dans lequel une source acoustique émet dans l'eau un signal acoustique et au moins une paire de capteurs hydrophone/géophone disposés sur le fond de l'eau relève des enregistrements hydrophone H et géophone G, et dans lequel on détermine une calibration que l'on applique à ces enregistrements, **caractérisé en ce que** pour déterminer la calibration, on détermine en fonction des enregistrements hydrophone et géophone un signal qui correspond au signal source propagé à travers la couche d'eau jusqu'aux capteurs et on choisit la calibration que l'on applique aux enregistrements hydrophone et géophone, de telle sorte qu'elle minimise au mieux l'énergie de ce signal, dans une fenêtre temporelle au delà d'un temps théorique après lequel le signal provenant de la source devrait être éteint.

**2.** Procédé selon la revendication 1, **caractérisé en ce qu'**on filtre les enregistrements hydrophone H par un opérateur leur ajoutant une réflexion fantôme de type géophone puis on filtre les enregistrements géophone G par un opérateur leur ajoutant une réflexion fantôme de type hydrophone et **en ce que** l'on cherche une calibration qui minimise au mieux l'énergie de la différence entre les enregistrements hydrophone et les enregistrements géophone ainsi filtrés sur une fenêtre temporelle dans ladite fenêtre temporelle.

**3.** Procédé selon l'une des revendications 1 et 2, **caractérisé en ce qu'**on calibre les enregistrements géophone sur les enregistrements hydrophone.

**4.** Procédé selon l'une des revendications précédentes, **caractérisé par** les différentes étapes suivantes :

- on détermine des données hydrophone $H_R$ et géophone $G_R$ correspondant aux enregistrements H et G propagés à travers un aller-retour dans la couche d'eau,
- on calcule des données somme hydrophone $H_\Sigma$ et différence géophone $G_\Delta$ telles que :

$$H_\Sigma = \frac{H + rH_R}{2}$$

et

$$G_\Delta = \frac{G + rG_R}{2}$$

r étant une fonction de transfert modélisant la surface de l'eau,
- on détermine des fonctions de calibration $C_H$, $C_G$ minimisant, au delà d'un temps théorique d'extinction, l'énergie de :

$$S = C_H * H_\Sigma - C_G * G_\Delta$$

S correspondant au signal source propagé à travers la couche d'eau,
- on calibre les données géophones et/ou hydrophones par convolution avec les fonctions de calibration $C_G$ et $C_H$.

5. Procédé selon la revendication 4, **caractérisé en ce que** $C_H$ est choisi égal à 1.

6. Procédé selon la revendication 4, **caractérisé en ce que** r est choisi égal à 1.

7. Procédé selon l'une des revendications précédentes, **caractérisé en ce qu'**on détermine des paramètres physiques en minimisant l'énergie du signal S dans une fenêtre temporelle au delà du temps théorique d'extinction.

8. Procédé selon la revendication 6, **caractérisé en ce qu'**on détermine la profondeur $\Delta z$ de la couche d'eau en calculant pour plusieurs valeurs de $\Delta z$ l'énergie du signal S, dans une fenêtre temporelle au delà de son temps théorique d'extinction et en choisissant celle qui minimise cette énergie.

9. Procédé selon les revendications 4 et 7, **caractérisé en ce qu'**on détermine la fonction de transfert r de la surface de l'eau en minimisant l'énergie du signal S, dans une fenêtre temporelle au delà de son temps théorique d'extinction.

10. Procédé selon l'une des revendications précédentes, **caractérisé en ce qu'**il présente un contrôlè qualité dans lequel il est vérifié que le signal source propagé S déterminé en fonction des enregistrements hydrophone et géophone calibrés, contient une énergie minimale dans une fenêtre temporelle au delà de son temps théorique d'extinction.

11. Procédé selon la revendication 4, **caractérisé en ce que** pour déterminer les données hydrophone $H_R$ et géophone $G_R$, on applique aux enregistrements hydrophone H et géophone G un opérateur Z correspondant à la propagation à travers un aller-retour dans la couche d'eau et **en ce que**, pour déterminer la fonction de calibration C, on minimise l'énergie de S à la fois au delà de son temps théorique d'extinction et dans le domaine de validité de l'approximation à laquelle correspond l'opérateur Z.

12. Procédé de prospection sismique marine au moyen d'au moins une paire de capteurs hydrophone/géophone disposés sur le fond de l'eau, dans lequel une source acoustique émet dans l'eau un signal et les capteurs au fond de l'eau relèvent des enregistrements hydrophone H et géophone G, **caractérisé en ce que** l'on met en oeuvre le procédé de traitement de calibration selon l'une des revendications précédentes et on traite les données ainsi obtenues pour en déduire une information sur la géologie du sous-sol.

**EP 0 786 670 B1**

**Patentansprüche**

1. Seismisches Bearbeitungsverfahren, bei dem eine akustische Quelle im Wasser ein akustisches Signal aussendet und wenigstens ein am Wassergrund angeordnetes Hydrophon/Geophon-Wandlerpaar hydrophone H und geophone G Aufzeichnungen aufnimmt, und bei dem eine Kalibrierung bestimmt wird, die an diesen Aufzeichnungen angewandt wird, **dadurch gekennzeichnet, daß** zum Bestimmen der Kalibrierung abhängig von den hydrophonen und geophonen Aufzeichnungen ein Signal bestimmt wird, das dem Quellensignal entspricht, welches sich durch die Wasserschicht hindurch bis zu den Wandlern ausbreitet, und daß die Kalibrierung, die an den hydrophonen und geophonen Aufzeichnungen angewandt wird, derart ausgewählt wird, daß die Energie dieses Signals soweit möglich minimiert wird, in einem Zeitfenster jenseits einer theoretischen Zeit, nach der das von der Quelle stammende Signal ausgelöscht sein sollte.

2. Verfahren nach Anspruch 1, **dadurch gekennzeichnet, daß** die hydrophonen Aufzeichnungen H mit einem Operator gefiltert werden, der diesen eine geophonartige Phantomreflektion hinzufügt, anschließend die geophonen Aufzeichnungen G mit einem Operator gefiltert werden, der diesen eine hydrophonartige Phantomreflektion hinzufügt, und daß eine Kalibrierung gesucht wird, die die Energie der Differenz zwischen den so gefilterten hydrophonen Aufzeichnungen und geophonen Aufzeichnungen über ein Zeitfenster in dem genannten Zeitfenster soweit wie möglich minimiert.

3. Verfahren nach einem der Ansprüche 1 und 2, **dadurch gekennzeichnet, daß** die geophonen Aufzeichnungen über den hydrophonen Aufzeichnungen kalibriert werden.

4. Verfahren nach einem der vorhergehenden Ansprüche; **gekennzeichnet durch** die folgenden verschiedenen Schritte:

   - es werden hydrophone Daten $H_R$ und geophone Daten $G_R$ bestimmt, die den Aufzeichnungen H und G entsprechen, die sich **durch** die Wasserschicht hindurch hin und zurück ausgebreitet haben,
   - es werden hydrophone Datensummen $H_\Sigma$ und geophone Differenzdaten $G_\Delta$ auf folgende Art berechnet:

$$H_\Sigma = \frac{H + rH_R}{2}$$

*und*

$$G_\Delta = \frac{G + rG_R}{2}$$

   wobei r eine Übertragungsfunktion ist, welche die Oberfläche des Wassers modelliert,
   - es werden Kalibrierungsfunktion $C_H$, $C_G$ bestimmt, die jenseits einer theoretischen Auslöschzeit die Energie von:

$$S=C_H{*}H_\Sigma{-}C_G{*}G_\Delta$$

   minimieren, wobei S dem Quellensignal entspricht, das sich **durch** die Wasserschicht hindurch ausbreitet,
   - es werden die geophonen und/oder hydrophonen Daten per Faltung mit den Kalibrierungsfunktionen $C_G$ und $C_H$ kalibriert.

5. Verfahren nach Anspruch 4, **dadurch gekennzeichnet, daß** $C_H$ gleich 1 gewählt wird.

6. Verfahren nach Anspruch 4, **dadurch gekennzeichnet, daß** r gleich 1 gewählt wird.

7. Verfahren nach einem der vorhergehenden Ansprüche, **dadurch gekennzeichnet, daß** physikalische Parameter bestimmt werden, indem die Energie des Signals S in einem Zeitfenster jenseits der theoretischen Auslöschzeit minimiert wird.

11

**8.** Verfahren nach Anspruch 6, **dadurch gekennzeichnet, daß** die Tiefe $\Delta z$ der Wasserschicht bestimmt wird, indem für mehrere Werte von $\Delta z$ die Energie des Signals S in einem Zeitfenster jenseits der theoretischen Auslöschzeit berechnet wird und indem diejenige Energie ausgewählt wird, die diese Energie minimiert.

**9.** Verfahren nach den Ansprüchen 4 und 7, **dadurch gekennzeichnet, daß** die Übertragungsfunktion r der Wasseroberfläche bestimmt wird, indem die Energie des Signals S in einem Zeitfenster jenseits der theoretischen Auslöschzeit minimiert wird.

**10.** Verfahren nach einem der vorhergehenden Ansprüche, **dadurch gekennzeichnet, daß** eine Qualitätskontrolle vorgesehen ist, bei der überprüft wird, ob das ausgebreitete Quellensignal S, das abhängig von den kalibrierten hydrophonen und geophonen Aufzeichnungen bestimmt ist, eine minimale Energie in einem Zeitfenster jenseits seiner theoretischen Auslöschzeit enthält.

**11.** Verfahren nach Anspruch 4, **dadurch gekennzeichnet, daß** zum Bestimmen der hydrophonen $H_R$ und geophonen $G_R$ Daten an den hydrophonen H und geophonen G Aufzeichnungen ein Operator C angewandt wird, der der Hin- und Rückausbreitung durch die Wasserschicht hindurch entspricht, und daß zum Bestimmen der Kalibrierungsfunktion C die Energie von S zugleich jenseits dessen theoretischer Auslöschzeit und im Gültigkeitsbereich der Näherung minimiert wird, der der Operator Z entspricht.

**12.** Seismisches Meererkundungsverfahren mittels wenigstens eines am Wassergrund angeordneten Hydrophon/Geophon-Wandlerpaares, bei dem eine akustische Quelle im Wasser ein Signal aussendet und die Wandler am Boden des Wassers hydrophone H und geophone G Aufzeichnungen aufnehmen, **dadurch gekennzeichnet, daß** ein Kalibrierungsbearbeitungsverfahren nach einem der vorhergehenden Ansprüche angewandt wird, und die so erhaltenen Daten zum Ableiten einer Information über die unterirdische Geologie bearbeitet werden.

**Claims**

**1.** A seismic processing method in which a sound source emits a sound signal, and at least one pair of hydrophone-geophone sensors disposed on a water bottom pick up hydrophone and geophone recordings H and G, and in which calibration is determined that is applied to the recordings, the method being **characterized in that** in order to determine the calibration a signal which corresponds to the source signal propagated through the layer of water to the sensor is determined as a function of the hydrophone and geophone recordings, and the calibration that is applied to the hydrophone and geophone recordings is selected so that it minimizes the energy of the signal as much as possible in a time window beyond a theoretical time, after which the signal coming from the source must be extinguished.

**2.** A method according to claim 1, **characterized in that** the hydrophone recordings H are filtered by an operator that adds a geophone type ghost reflection thereto, and then the geophone recordings G are filtered by an operator that adds a hydrophone type ghost reflection thereto, and **in that** a calibration is sought to provide, in said time window, best minimization of the energy of the difference between the hydrophone recordings and the geophone recordings as filtered in this way.

**3.** A method according to claim 1 or 2, **characterized in that** the geophone recordings are calibrated against the hydrophone recordings.

**4.** A method according to any preceding claim, **characterized by** the following steps:

· hydrophone data $H_R$ and geophone data $G_R$ is determined corresponding to the recordings H and G propagated over a go-and-return path through the layer of water,
· hydrophone sum data $H_\Sigma$ and geophone difference data $G_\Delta$ are calculated as follows:

$$H_\Sigma = \tfrac{1}{2}(H + rH_R)$$

and

$$G_\Delta = \tfrac{1}{2}(G - rG_R)$$

$\underline{r}$ being a transfer function modeling the surface of water;

· calibration functions $C_H$, $C_G$ are determined to minimize, beyond a theoretical extinction time, the energy of S:

$$S = C_H*H_\Sigma - C_G*G_\Delta$$

where S corresponds to the source signal propagated through the layer of water; and

· the geophone and/or hydrophone data is calibrated by convolution with the calibration functions $C_G$ and $C_H$.

5. A method according to claim 4, **characterized in that** $C_H$ is chosen equal to 1.

6. A method according to claim 4, **characterized in that** $\underline{r}$ is chosen equal to 1.

7. A method according to any preceding claim, **characterized in that** physical parameters are determined by minimizing the energy of the signal S in a time window beyond the theoretical extinction time.

8. A method according to claim 6, **characterized in that** the depth $\Delta z$ of the layer of water is determined by calculating, for a plurality of values $\Delta z$, the energy of the signal S in a time window beyond its theoretical extinction time, and by selecting the value of $\Delta z$ that minimizes said energy.

9. A method according to claims 4 and 7, **characterized in that** the transfer function $\underline{r}$ of the water surface is determined by minimizing the energy of the signal S in a time window beyond its theoretical extinction time.

10. A method according to any preceding claim, **characterized in that** it includes quality control in which it is verified that the propagated source signal S determined as a function of the calibrated hydrophone and geophone recordings contains minimal energy in a time window beyond its theoretical extinction time.

11. A method according to claim 4, **characterized in that** in order to determine the hydrophone data $H_R$ and the geophone data $G_R$, an operator Z is applied to the hydrophone recordings H and to the geophone recordings G, where the operator Z corresponds to propagation along a go-and-return path in the layer of water, and **in that**, in order to determine the calibration function C, energy S is minimized both beyond its theoretical extinction time and in the domain in which the approximation to which the operator Z corresponds is valid.

12. A method of offshore seismic prospecting by means of at least one pair of hydrophone-geophone sensors disposed on a water bottom, in which a sound source emits a signal into the water and the sensors at the water bottom pick up hydrophone recordings H and geophone recordings G, the method being **characterized in that** the processing method for calibration according to any preceding claim is implemented and the data obtained thereby is processed to deduce information about the geology of the subsoil.

Fig.1

Fig.2

PR          RMF

H    Fig.3a

G    Fig.3b

$H_R$   Fig.3c

$G_R$   Fig.3d

$H_\Sigma$   Fig.3e

$G_\Delta$   Fig.3f

S    Fig.3g

G'   Fig.3h